# EUROPEAN PATENT APPLICATION

(11) **EP 1 667 390 A1**
(43) Date of publication of application: **07.06.2006**
(21) Application number: 03818719.1
(22) Date of filing: 19.09.2003
(51) Int. Cl.: H04L 27/00

(54) **MODULATOR WITH NONLINEAR EQUALIZER**

(71) Applicant: FUJITSU LIMITED, Kawasaki-shi, Kanagawa 211-8588 (JP)
(72) Inventor: KOBAYASHI, Kenzo, FUJITSU WIRELESS SYSTEMS LTD., Ohsato-gun, Saitama 360-0133 (JP); AIZAWA, Shigemi, FUJITSU WIRELESS SYSTEMS LIMITED, Ohsato-gun, Saitama 360-0133 (JP); TAMURA, Toshio, FUJITSU WIRELESS SYSTEMS LIMITED, Ohsato-gun, Saitama 360-0133 (JP); OIDE, Kenichi, FUJITSU WIRELESS SYSTEMS LIMITED, Ohsato-gun, Saitama 360-0133 (JP); IWAMATSU, Takanori, FUJITSU LIMITED, Kawasaki-shi, Kanagawa21 1-8588 (JP)
(74) Representative: Sunderland, James Harry
(86) International application number: PCT/JP2003/012035
(87) International publication number: WO 2005/029800

(57) **Abstract**

A modulation system for equalizing output distortion of a high frequency amplifier (232) of the output stage of a communicator by providing a digital filter (11) sampling binary input data at N times the symbol rate (N is an integer of 2 or more) and n-arizing it to ternary or higher data for output and a nonlinear equalizer (12) for overcompensating for the output of the digital filter by pre-measured nonlinear distortion of the output of the high frequency amplifier.

## Description

### TECHNICAL FIELD

The present invention relates to a modulation system provided with a nonlinear equalizer, more particularly relates to a predistorter type modulation system provided with a nonlinear equalizer.

### BACKGROUND ART

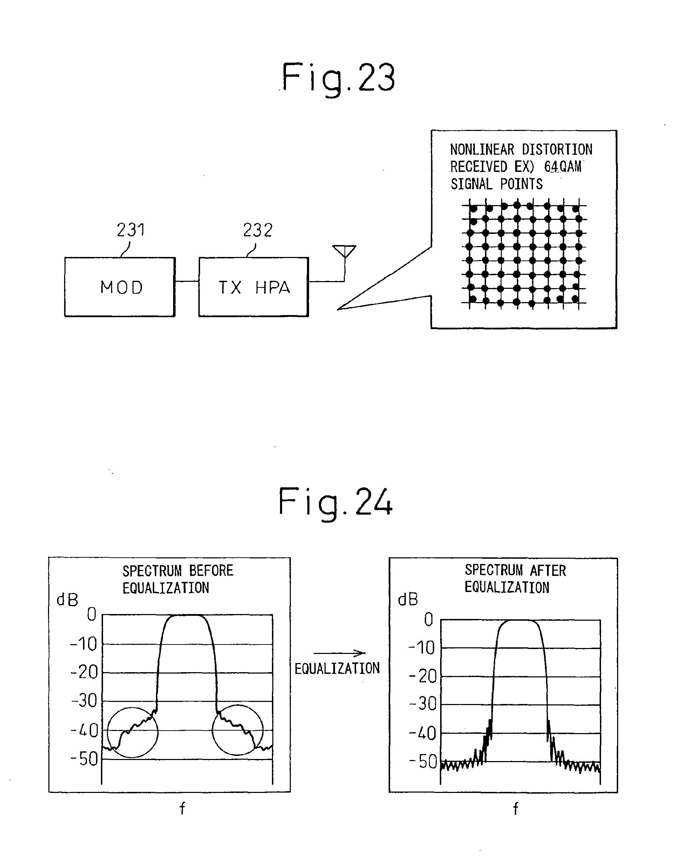

FIG. 23 is a block diagram showing the general configuration of a conventional communicator. In the figure, 231 indicates a modulation system (MOD), while 232 indicates a high frequency amplifier (TX HPA). In this communicator, nonlinear distortion occurs in the output stage signal of the high frequency amplifier 232 at the output stage. In the illustrated example, the example is shown where several of the 64 QAM signal points exist at positions away from the points on the lattice and therefore there is nonlinear distortion in the output signal. If there is distortion in the output signal in this way, it becomes a case of deterioration of the error rate of the transmission signal output from the transmitter. There are therefore the problems that IM3 (cross-modulation distortion) or other spurious waves are output or the power consumption of the device increases due to the high output power.

Therefore, a nonlinear equalizing means becomes necessary for eliminating the nonlinear distortion from the output signal of the high frequency amplifier.

FIG. 24 is a view of the signal spectrum before equalization of only the nonlinear distortion of the output signal of the high frequency amplifier 232 and the signal spectrum after equalization of only the nonlinear distortion. In the figure, the abscissa indicates the frequency f, while the ordinate indicates the output level by decibels dB. As shown by the circle marks in the graph at the right of the illustration, distortion occurs at the two side wave bands of the center frequency of the output signal. If this nonlinear distortion is equalized, as shown by the graph at the right of the illustration, the distortion is eliminated from the two side wave bands of the center frequency of the output signal.

As the equalizing means (compensating means) for this nonlinear distortion, in the past, the analog type, Cartesian type (IMT-2000 etc.), predistorter type, etc. have been known.

The analog type has difficulty compensating for some characteristics of equalized devices and takes a long time for adjustment due to variations in the characteristics of the individual devices, so it was not possible to sufficiently raise the effect of compensation of only the nonlinear distortion or it was difficult to produce devices with uniform characteristics.

The Cartesian type improves the characteristics, but has the problem of a larger size and a higher price.

The predistorter type is designed relatively inexpensively without regard to the characteristics of the equalized devices, but various means have been proposed for the conventional predistorter type for correcting the input of digital filters for the purpose of correcting the positions of the signal points. However, with this method, the correction is performed for each symbol timing. No correction is made in the middle of the path of the signals. Therefore, no improvement in performance can be expected.

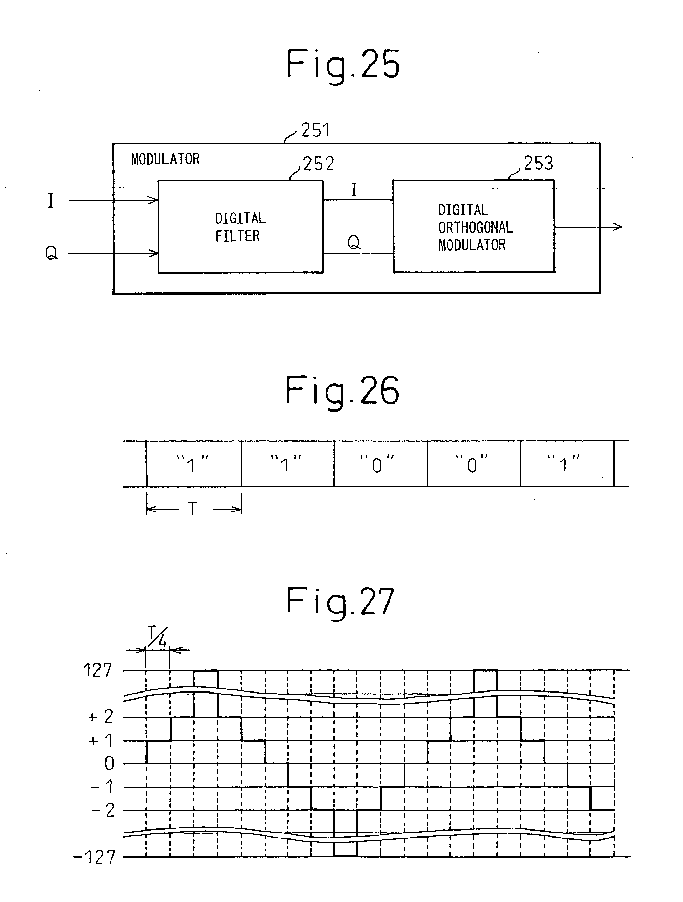

FIG. 25 is a block diagram showing the configuration of an example of a conventional predistorter type modulation system without the signal point correcting means at the input of the digital filter.

In this example, the modulation system 251 is provided with a digital filter 252 which samples the binary input data at N times the symbol rate and n-arizes it to trinary or higher data for output and a digital orthogonal modulator 253 which orthogonally modulates the output signal of the digital filter 252.

FIG. 26 is a view showing binary data input to the digital filter 252 shown in FIG. 25. The period of 1 symbol of this binary data is "T". Therefore, the symbol rate of this input binary data is 1/T.

FIG. 27 is a view of the n-ary data obtained at the output of the digital filter 252 shown in FIG. 25. In the illustrated example, the period of 1 symbol becomes T/4. Therefore, the symbol rate becomes four times the input data, and each input symbol data is n-arized to any of 2⁸ data in this example. In this way, by increasing the symbol rate N fold and n-arizing it, it is possible to modulate the input data very finely such as with an analog signal.

However, the modulation system shown in FIG. 25 does not include any configuration for compensating for only the nonlinear distortion in the output of the digital filter. For this reason, the high frequency amplifier of the output stage of the communicator has to be an expensive one with as little nonlinear distortion as possible.

### DISCLOSURE OF THE INVENTION

An object of the present invention, in consideration of the problems in the prior art, is to provide a modulation system which can compensate for even the nonlinear distortion generated by an inexpensive high frequency amplifier of the output stage of a communicator.

To achieve this object, what is provided by the first aspect of the present invention is a modulation system comprising a digital filter sampling binary input data at N times the symbol rate (N being an integer of 2 or more) and n-arizing it to trinary or higher data for output and a nonlinear equalizer over-compensating for the output of this digital filter by nonlinear distortion measured in advance for the output of the high frequency amplifier and outputting the result.

According to this first aspect, the output of the digital filter is over-compensated by the nonlinear distortion measured in advance for the output of the high frequency amplifier and the result output, so an equalized signal is obtained comprised of the output of the high frequency amplifier without nonlinear distortion.

According to the second aspect of the present invention, the modulation system further comprises a digital orthogonal modulator digitally orthogonally modulating the output of the nonlinear equalizer and compensates for the nonlinear distortion at the baseband.

According to this second aspect, it becomes possible to equalize the nonlinear distortion in the baseband of the output of the digital filter.

According to a third aspect of the present invention, the modulation system further comprises a digital orthogonal modulation system digitally orthogonally modulating the output of the digital filter between the digital filter and nonlinear equalizer and compensates for the nonlinear distortion at the intermediate frequency band.

According to a fourth aspect of the present invention, there is provided the second aspect wherein the nonlinear equalizer is provided with an amplitude compensator compensating for the distortion prediction of the output amplitude of the high frequency amplifier at each sample timing of the output of the digital filter for equalization and a phase compensator compensating for the distortion prediction of the output phase of the high frequency amplifier at each sample timing of the output of the digital filter for equalization.

According to this fourth aspect, it is possible to equalize both the output amplitude and output phase of the high frequency amplifier.

According to a fifth aspect of the present invention, the nonlinear equalizer compensates for the distortion at only the part where the distortion of the output of the high frequency amplifier is a predetermined value or more.

According to this fifth aspect, it is possible to reduce the size of the circuit of the modulation system and possible to reduce the power consumption.

According to a sixth aspect of the present invention, the modulation system further comprises a 1/n frequency generator which inputs a signal having a frequency of 1/n (n is a positive integer) the symbol frequency of the binary input data to the nonlinear equalizer, and the nonlinear equalizer receiving the signal of the 1/n frequency outputs a tertiary cross-modulation distortion.

According to this sixth aspect, it is possible to equalize the tertiary cross-modulation distortion in the output of the high frequency amplifier.

According to a seventh aspect of the present invention, the nonlinear equalizer uses the linear output power level of the high frequency amplifier with respect to the input power level of the modulation system as a provisional output power level, uses the input power level corresponding to the provisional output power level on the distortion curve of the output level of the high frequency amplifier as a provisional input power level, uses the ratio of the provisional input power level and provisional output power level as the correction coefficient of the amplitude component, calculates the amount of suppression by the high frequency amplifier by the value of the correction coefficient multiplied with the input power level, and outputs a correction value canceling out that amount of suppression.

According to this seventh aspect, it is possible to obtain the correction coefficients for correcting the distortion in the output of the high frequency amplifier accurately in a short time.

According to an eighth aspect of the present invention, there is provided the modulation system of the first aspect wherein the digital orthogonal modulator comprises a first multiplier multiplying an input I channel signal with a sine wave, a second multiplier multiplying an input Q channel signal with a cosine wave, and an adder adding the outputs of the first and second multipliers.

According to a ninth aspect of the present invention, the modulation system further comprises a network analyzer for measuring fluctuation of the output power level of the high frequency amplifier with respect to fluctuation of the input power of the nonlinear equalizer and automatically generates a distortion compensation amount.

### BRIEF DESCRIPTION OF THE DRAWINGS

The above object and features of the present invention will become clearer from the following description of the best mode for working the invention explained below with reference to the attached drawings.

FIG. 1 is a block diagram showing the configuration of a modulation system according to an embodiment of the present invention.

FIG. 2 is a block diagram showing an example of the configuration of a nonlinear equalizer in the modulation system shown in FIG. 1.

FIG. 3 is a block diagram showing another example of the configuration of a nonlinear equalizer in the modulation system shown in FIG. 1.

FIG. 4 is a conceptual graph for explaining compensation of nonlinear amplitude distortion according to an embodiment of the present invention.

FIG. 5 is a block diagram showing the basic configuration of an amplitude compensator according to an embodiment of the present invention.

FIG. 6 is a block diagram showing example of the configuration of an amplitude compensator according to an embodiment of the present invention.

FIG. 7 is a view of an example of the content of a memory of an amplitude compensator shown in FIG. 6.

FIG. 8 is a block diagram showing the configuration of a phase compensator according to an embodiment of the present invention.

FIG. 9 is a block diagram showing an example of the configuration of an amplitude and phase compensator according to an embodiment of the present invention.

FIG. 10 is a graph for explaining the thinking behind amplitude compensation and phase compensation according to an embodiment of the present invention.

FIG. 11 is a block diagram showing an example of the configuration of a digital orthogonal modulator according to an embodiment of the present invention.

FIG. 12 is a view of an example of the output waveform of a multiplier in a digital orthogonal modulator shown in FIG. 11.

FIG. 13 is a view of the output of an orthogonal modulator in the case of FIG. 12.

FIG. 14 is a view explaining a nonlinear amplitude distortion compensation coefficient according to an embodiment of the present invention.

FIG. 15 is a view explaining the principle of the method for finding the nonlinear amplitude distortion compensation coefficient according to an embodiment of the present invention.

FIG. 16 is a view explaining a method of finding a nonlinear amplitude distortion compensation coefficient according to an embodiment of the present invention.

FIG. 17 is a graph showing the relationship between an input value obtained as explained by FIG. 1 and a nonlinear amplitude distortion compensation coefficient.

FIG. 18 is a graph showing the amount of phase compensation found after finding the nonlinear amplitude distortion compensation coefficient obtained according to an embodiment of the present invention.

FIG. 19 is a block diagram showing the detailed configuration of a modulation system according to an embodiment of the present invention.

FIG. 20 is a block diagram showing the configuration of a modulation system automatically generating a distortion automatic correction amount according to an embodiment of the present invention.

FIG. 21 is a block diagram showing the configuration of a modulation system for compensating for nonlinear distortion at the intermediate frequency band according to an embodiment of the present invention.

FIG. 22 is a block diagram showing the detailed configuration of the modulation system shown in FIG. 21.

FIG. 23 is a block diagram for explaining nonlinear distortion of an output stage in a conventional communicator.

FIG. 24 is a graph for explaining equalization of nonlinear distortion shown in FIG. 23.

FIG. 25 is a block diagram showing the configuration of an example of a conventional modulation system.

FIG. 26 is a view of an example of binary data input to the modulation system shown in FIG. 25.

FIG. 27 is a view of an example of n-ary data of N times the symbol rate obtained at the output of the digital filter in the modulation system shown in FIG. 25.

### BEST MODE FOR WORKING THE INVENTION

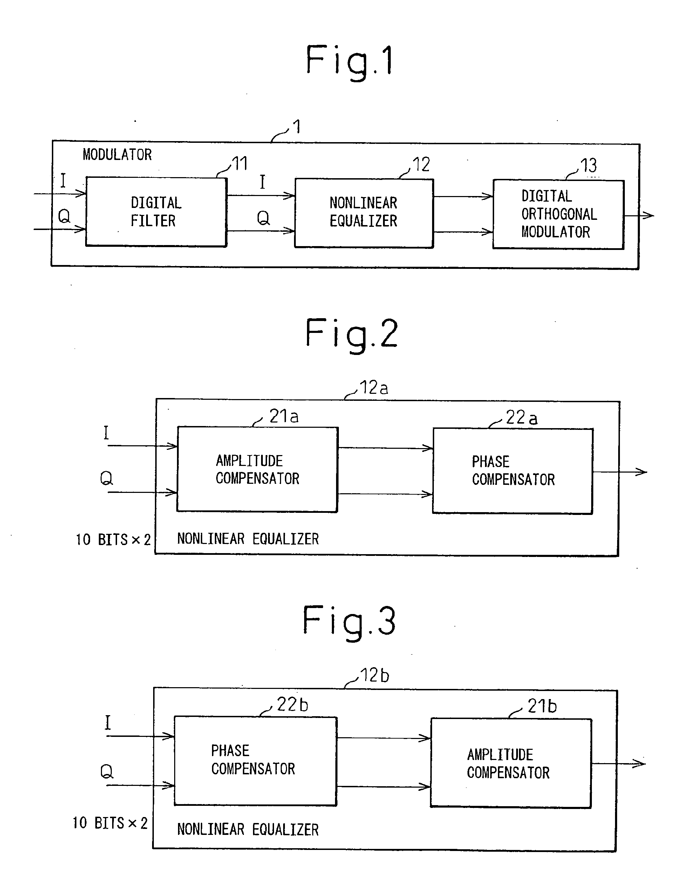

FIG. 1 is a block diagram showing the configuration of a modulation system according to an embodiment of the present invention. In the figure, the modulation system 1 is provided with a digital filter 11, a nonlinear equalizer 12, and a digital orthogonal modulator 13. The functions of the digital filter 11 are similar to those of the conventional one shown in FIG. 25. The output is the baseband. Therefore, the nonlinear equalizer 12 compensates for nonlinear distortion in the baseband.

The digital filter 11, as shown in FIG. 25, samples the binary input data at N times the symbol rate (N is an integer of 2 or more) and outputs it n-arized to trinary data or more.

The nonlinear equalizer 12 compensates for the nonlinear distortion in the output signal of the high frequency amplifier at the output stage of the communicator (for example, the high frequency amplifier 232 of FIG. 23) for equalization.

The digital orthogonal modulator 13 orthogonally modulates the output of the nonlinear equalizer 12.

FIG. 2 is a block diagram showing an example of the configuration of a nonlinear equalizer in the modulation system shown in FIG. 1. In the figure, the nonlinear equalizer 12a is provided with an amplitude compensator 21a for amplitude compensation of the output of the digital filter 11 and a phase compensator 22a for phase compensation of the output of the amplitude compensator 21a.

The amplitude compensator 21a compensates for the amplitude distortion of the output signal of the high frequency amplifier with respect to example the 10 bit I and Q signals of the digital filter 11. The phase compensator 22a compensates for the phase distortion of the output signal of the high frequency amplifier with respect to the output signal of the amplitude compensator 21a.

The order of connection of the amplitude compensator and phase compensator may be reversed from FIG. 2 as shown in FIG. 3.

FIG. 3 is a block diagram showing another example of the configuration of a nonlinear equalizer in the modulation system shown in FIG. 1. In the figure, the nonlinear equalizer 12b is provided with a phase compensator 22b for phase compensation of the output of the digital filter 11 and an amplitude compensator 21b for amplitude compensation of the output of the phase compensator 22b.

The phase compensator 22a compensates for the phase distortion of the output signal of the high frequency amplifier with respect to for example the 10 bit I and Q signals from the digital filter 11. The amplitude compensator 21b compensates for the phase distortion of the output signal of the high frequency amplifier with respect to the output signal of the phase compensator 22b.

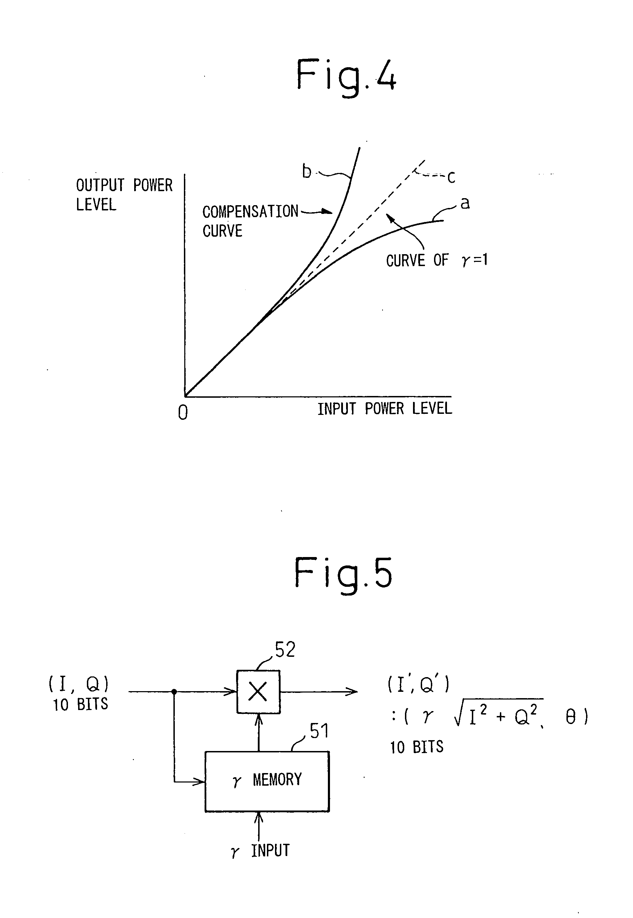

FIG. 4 is a conceptual graph for explaining compensation of nonlinear amplitude distortion according to an embodiment of the present invention. In the figure, as shown in curve a, when the output signal of the high frequency amplifier is distorted nonlinearly, the nonlinear equalizer 12 according to an embodiment of the present invention over-compensates for the distortion, so forms a compensation curve such as shown in curve b. Due to this, at the output of the high frequency amplifier at the output stage of communicator, an input/output characteristic of a line with a nonlinear distortion-free nonlinear distortion coefficient γ of 1 is obtained.

FIG. 5 is a block diagram showing the basic configuration of an amplitude compensator according to an embodiment of the present invention. In the figure, the amplitude compensator 21a or 21b is provided with a memory 51 storing in advance for example the nonlinear distortion coefficient γ corresponding to the various amplitude levels of the 10 bit n-arized input signal (I, Q) and a multiplier 52 multiplying the amplitude level of the input signal with the nonlinear distortion coefficient γ. Due to this, when the signal I, Q is input to the amplitude compensator, the output (I', Q') of the amplitude compensator becomes γ(I²+Q²)^{1/2}. Regarding the phase θ in this case, if multiplying the I coordinate and Q coordinate with the nonlinear distortion coefficient γ, the phase θ becomes the same between the input signal and output signal.

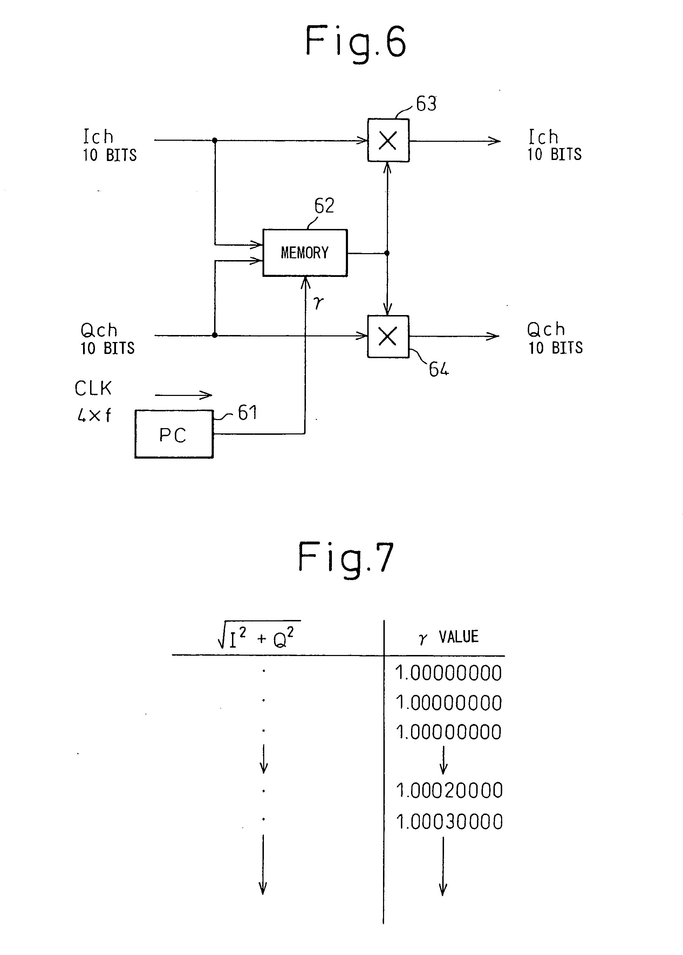

FIG. 6 is a block diagram of an example of the configuration of an amplitude compensator 21a (see FIG. 2) or 21b (see FIG. 3) according to embodiment of the present invention. In the figure, the amplitude compensator is provided with a memory 62 for storing the nonlinear distortion coefficient γ of the output signal of the high frequency amplifier obtained in advance from the personal computer (PC) 61, I channel multiplier 63, and Q channel multiplier 64. Due to this, signals are obtained comprised of the I channel and Q channel input amplitudes multiplied with the nonlinear distortion coefficient γ at the outputs of the multipliers 63 and 64.

FIG. 7 is a view of an example of the content of the memory 62 in the amplitude compensator shown in FIG. 6. The figure shows the storage of the value of the nonlinear distortion coefficient γ corresponding to the amplitude (I²+Q²)^{1/2} in the I, Q spaces.

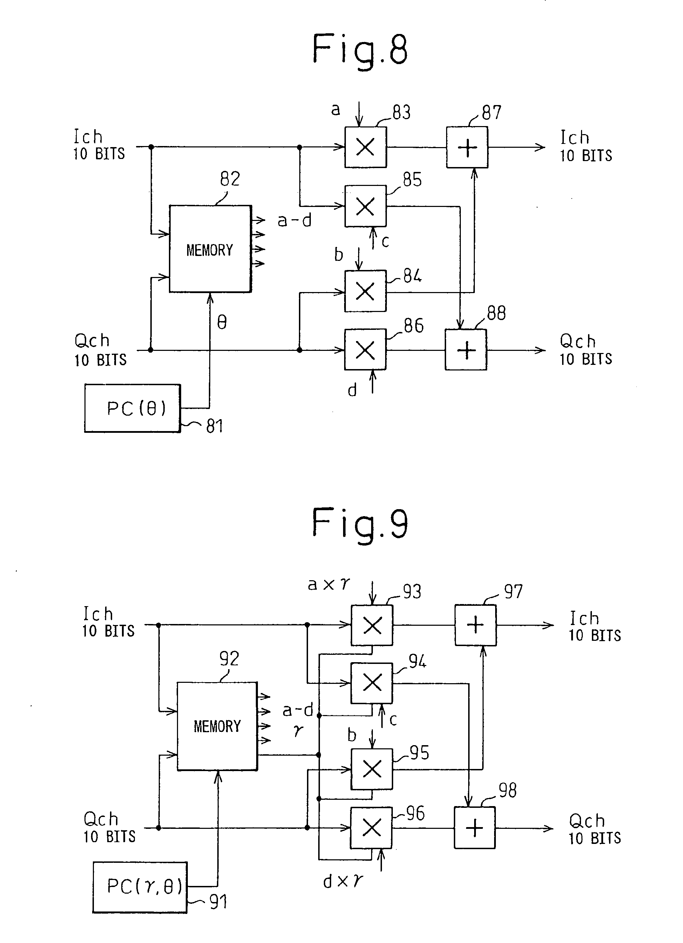

FIG. 8 is a block diagram showing the configuration of a phase compensator 22a (see FIG. 2) or 22b (see FIG. 3) according to an embodiment of the present invention. In the figure, 81 is a personal computer (PC) which predicts the phase distortion amount Δθ caused by the nonlinear distortion of the output signal of the high frequency amplifier for every bit of the I, Q amplitude levels. The phase compensator is provided with a memory 82 storing the phase distortion amount Δθ obtained from the personal computer 81 corresponding to the amplitude level of the input signal and outputting multiplication coefficients a, b, c, and d corresponding to the phase distortion amount Δθ, multipliers 83, 84, 85, and 86, and adders 87 and 88. The multipliers 83, 84, 85, and 86 and the adders 87 and 88 form a butterfly circuit (also known as an infinite phase shifter). The multiplication coefficients a, b, c, and d are determined in accordance with the phase distortion amount Δθ.

The multiplier 83, for example, multiples the 10 bit n-arized I channel input signal with the coefficient a, the multiplier 84, for example, multiplies the 10 bit n-arized Q channel input signal with the coefficient b, and the adder 87 adds the outputs of the multipliers 83 and 84 and outputs the result as the I channel signal.

The multiplier 85 multiplies the I channel input signal with the coefficient c, the multiplier 86 multiplies the Q channel input signal with the coefficient d, and the adder 88 adds the outputs of the multipliers 85 and 86 and outputs the result as the Q channel signal.

Due to this, the I, Q orthogonal spaces rotate by exactly the nonlinear phase distortion Δθ.

The amplitude compensator shown in FIG. 6 and the phase compensator shown in FIG. 8 can be combined into a single circuit such as shown in FIG. 9.

FIG. 9 is a block diagram showing an example of the configuration of an amplitude and phase compensator according to an embodiment of the present invention. In the figure, 91 indicates a personal computer (PC) predicting for example a nonlinear distortion coefficient γ and a phase distortion amount Δθ occurring due to the nonlinear distortion corresponding to various amplitude levels of an input signal (I, Q) of a multivalued signal of for example 10 bits for every bit of the I, Q amplitude levels. The amplitude and phase compensator is provided with a memory 92 storing the nonlinear distortion coefficient γ and phase distortion amount Δθ obtained from the personal computer 91 corresponding to the amplitude level of the input signal and outputs multiplication coefficients a, b, c, and d corresponding to the nonlinear distortion coefficient γ and the individual phase distortion amounts Δθ, multiplier 93, 94, 95, and 96, and adders 97 and 98. The multipliers 93, 94, 95, and 96 and the adders 97 and 98 form a butterfly circuit (also called an infinite phase shifter). The multiplication coefficients a, b, c, and d are determined corresponding to the phase distortion amount Δθ.

The multiplier 93, for example, multiplies the 10 bit n-arized I channel input signal with the coefficient a and nonlinear distortion coefficient γ, the multiplier 94, for example, multiplies the 10 bit n-arized Q channel input signal with the coefficient b and nonlinear distortion coefficient γ, and the adder 97 adds the outputs of the multipliers 93 and 94 and outputs the result as the I channel signal.

The multiplier 95 multiplies the I channel input signal with the coefficient c and nonlinear distortion coefficient γ, the multiplier 96 multiplies the Q channel input signal with the coefficient d and nonlinear distortion coefficient γ, and the adder 98 adds the outputs of the multipliers 95 and 96 and outputs the result as the Q channel signal.

Due to this, the amplitude distortion is compensated for, the I, Q orthogonal spaces are rotated by exactly the phase distortion Δθ, and the phase distortion is compensated.

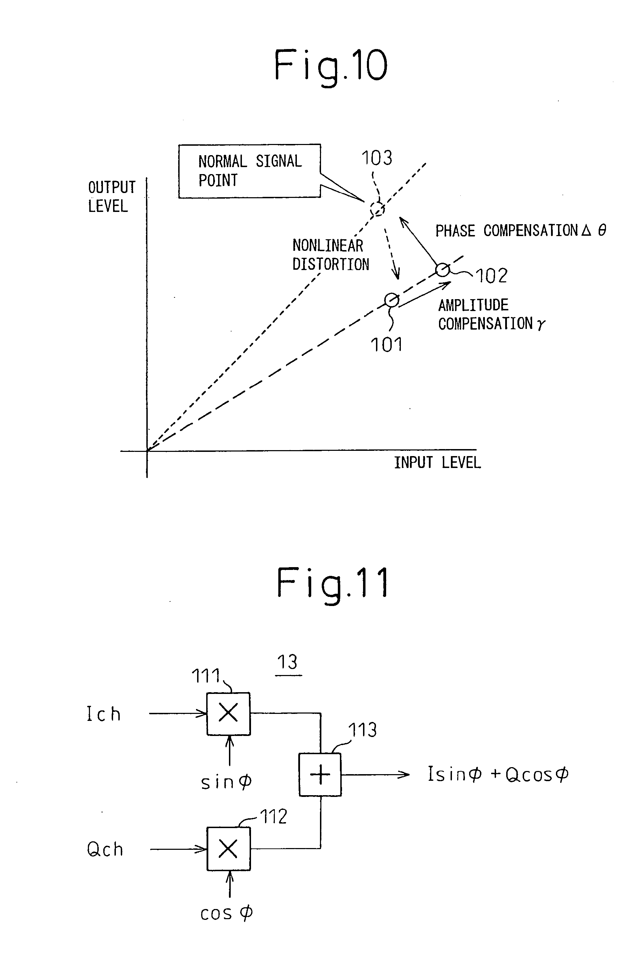

FIG. 10 is a graph for explaining the thinking behind the amplitude compensation and phase compensation according to an embodiment of the present invention. In the figure, the broken line shows the change in the output level of the nonlinear distortion with respect to the input signal, while the solid line shows the change in the output level compensated and equalized in distortion. Regarding the point 101 where nonlinear distortion occurs, by multiplying the nonlinear distortion coefficient γ with the output level, the amplitude compensated point 102 is obtained. Next, by performing phase compensation on the amplitude level of this point, a distortion-free normal signal point 103 is obtained.

FIG. 11 is a block diagram showing an example of the configuration of a digital orthogonal modulator according to an embodiment of the present invention. In the figure, the digital orthogonal modulator 13 (see FIG. 1) is provided with a multiplier 111 multiplying the I channel signal with the sine wave, a multiplier 112 multiplying the Q channel signal with the cosine wave, and an adder 113 adding an output of the multiplier 111 and an output of the multiplier 112 .

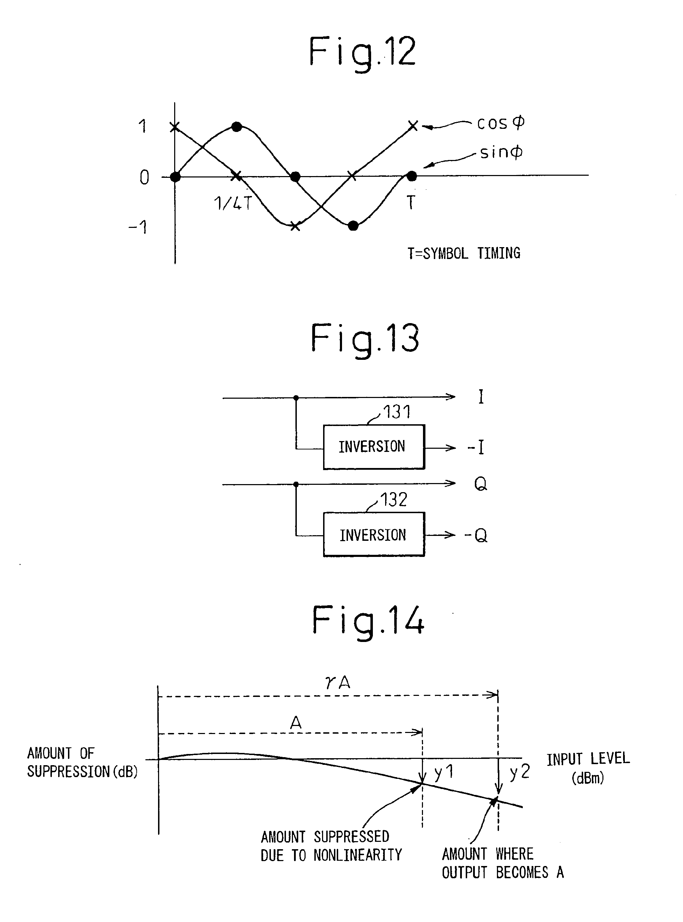

FIG. 12 is a view of an example of the output waveform of a multiplier in the digital orthogonal modulator shown in FIG. 11. In this example, the digital filter 11 (see FIG. 1) samples the binary input data at four times the symbol rate.

Due to this, as shown by the black dots in the drawing, the data is sampled every 1/4T the period T of the input signal. As a result, the I sinφ+Q cosφ output of the adder 113 becomes as follows as the sample points:
when 0T: Q cosφ
when 1/4T: I sinφ
when 2/4T:-Q cosφ
when 3/4T:-I sinφ.
Therefore, in the case of an orthogonal modulator for a digital filter sampling and outputting input data at four times the symbol rate, the output of the digital orthogonal modulator becomes as shown in FIG. 13.

In FIG. 13, the digital orthogonal modulator is provided with an I channel signal inversion circuit 131 and a Q channel signal inversion circuit 132. Due to this, the output of the digital orthogonal modulator becomes only the four I, -I, Q, and -Q. By successively selectively outputting these values, it is possible to configure the digital orthogonal modulator without using the multipliers 111, 112 and the adder 113 as shown in FIG. 11.

FIG. 14 is a view for explaining a nonlinear amplitude distortion compensation coefficient according to an embodiment of the present invention. The nonlinear distortion coefficient γ has to be set so that the output level becomes the distortion-free level A when the input level is γA. In the illustrated example, when the input level (dBm) is A, due to the nonlinear distortion, the amount of suppression (DB) of the output level is y1. When the input level is γA, the output level becomes the distortion-free value A, so the amount of suppression has to be y2. If the nonlinear distortion coefficient γ where the amount of suppress becomes y2 is found, equalization of the output of the nonlinear amplifier becomes possible.

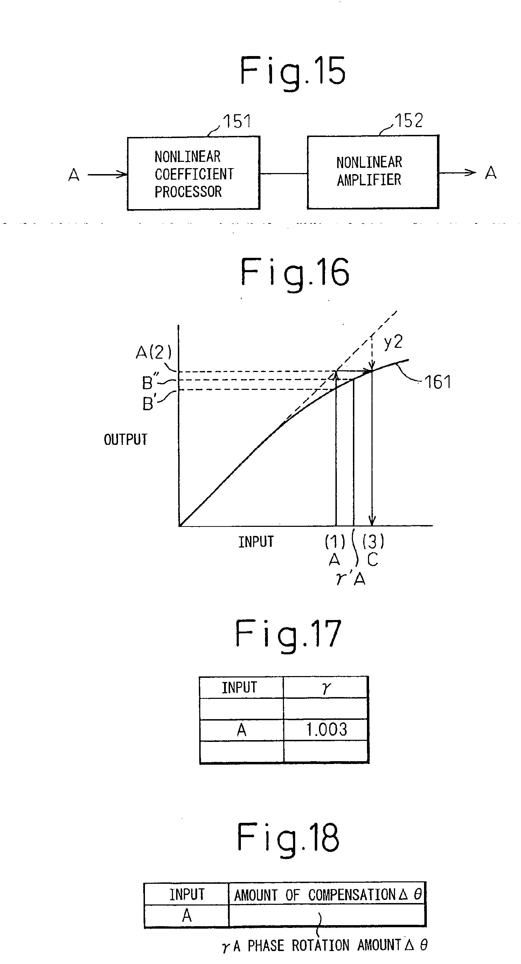

In FIG. 15, if multiplying the nonlinear distortion coefficient γ obtained by the processor 151 of the nonlinear distortion coefficient γ with the output level A and inputting the result to the nonlinear amplifier (high frequency amplifier) 152, the nonlinear amplifier 152 outputs the distortion-free value A.

FIG. 16 is a graph for explaining the method of finding the nonlinear distortion coefficient γ in the processor 151 shown in FIG. 15.

In the past, to find this nonlinear distortion coefficient γ, a process of trial and error was repeated as explained below, so a long time was required.

That is, in the past, the work of, first, finding the output level B' on the distortion curve corresponding to the input level A, making A/B' the nonlinear distortion coefficient γ', next making the input level γ'A and finding the output level B' ' on the distortion curve corresponding to this, and making A/B" the nonlinear distortion coefficient γ" was repeated. However, while repeating this conventional method enables one to approach the nonlinear distortion coefficient γ sought, an accurate nonlinear distortion coefficient γ is never found.

Next, the method of finding the nonlinear distortion coefficient γ according to an embodiment of the present invention will be explained.

In FIG. 16, to simplify the explanation, it is assumed that the input level and output level of the high frequency amplifier are equal to the distortion-free case. According to an embodiment of the present invention, the nonlinear distortion coefficient processor 151 first (1) makes the linear output power level A the provisional output power level with respect to the input power level A of the high frequency amplifier, (2) makes the input power level C corresponding to the provisional output power level A on the distortion curve 161 of the output level of the high frequency amplifier the provisional input power level, and (3) makes the ratio of the provisional input power level C and provisional output power level A the correction coefficient γ of the amplitude component. Further, the compensation amount γA calculated by multiplying the correction coefficient γ with the input power level A is used to cancel out the amount of suppression by the high frequency amplifier. Due to this, the nonlinear distortion coefficient γ is found directly without repeated trial and error like in the conventional case.

FIG. 17 is a graph showing the relationship between the input value obtained as explained by FIG. 16 and the nonlinear amplitude distortion compensation coefficient. In the example of the present invention, the nonlinear distortion coefficient γ when the input level is A is 1.003. Note that the nonlinear distortion coefficient γ has no correlation with the phase. Therefore, even if projected to the orthogonal axes I and Q, the values are the same. The compensation amounts become γI and γQ.

FIG. 18 is a view for explaining a method of finding a phase compensation amount according to an embodiment of the present invention. As shown in the drawing, since the compensation amount for compensation of nonlinear distortion when the input level of the high frequency amplifier is A is γA, the amount of phase compensation should be made Δθ.

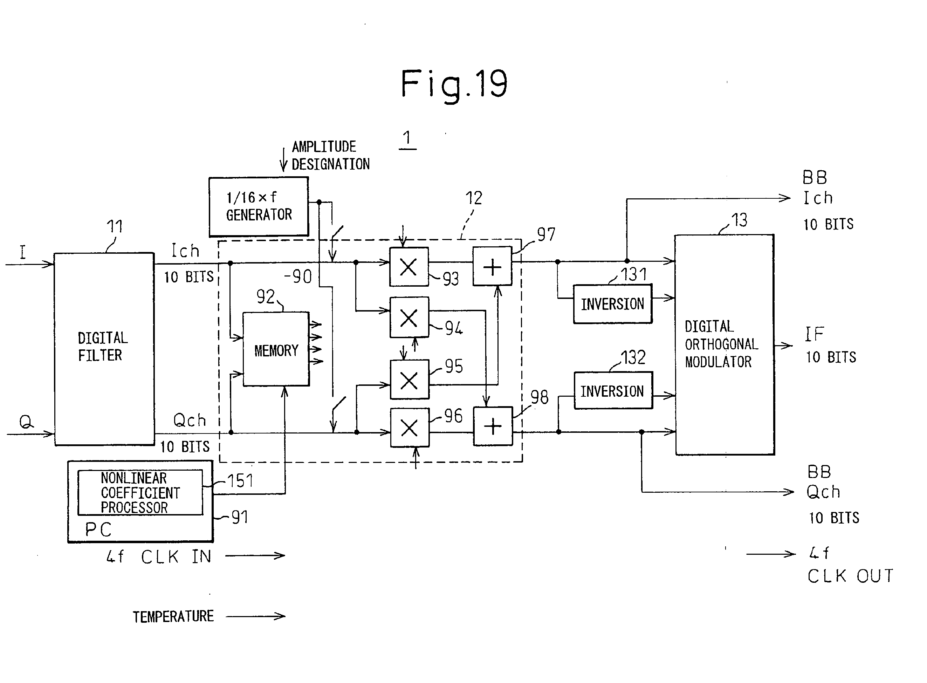

FIG. 19 is a block diagram showing the detailed configuration of a modulation system according to an embodiment of the present invention explained above. In the figure, the modulation system 1 is provided with the digital filter 11, a nonlinear equalizer 12, and a digital orthogonal modulator 13 shown in FIG. 1. As the nonlinear equalizer 12, the amplitude and phase compensator shown in FIG. 9 is employed. Further, a nonlinear coefficient processor 151 shown in FIG. 15 generating the nonlinear amplitude distortion coefficient γ and nonlinear phase distortion θ is provided in the personal computer (PC) 91. The method explained using FIGS. 14 to 18 is used to calculate the nonlinear amplitude distortion coefficient γ and nonlinear phase distortion Δθ and input them to the memory 92. In the present embodiment, as shown in FIG. 12 and 13, the digital filter 11 outputs data sampled by 4 times the sample rate of the input signal. For this reason, the embodiment is provided with the inversion circuits 131 and 132 connected to the output of the nonlinear equalizer 12.

Further, according to an embodiment of the present invention, a 1/16xf generator 191 generating a signal having a frequency 1/16 of the symbol frequency of the binary input data is provided. If cutting the input signal to the digital filter 11, inputting the output signal from the 1/16xf generator 191 to the nonlinear equalizer 12, and changing the amplitude input to the 1/16xf generator 191, the nonlinear equalizer 12 outputs a tertiary cross-modulation distortion (IM3) corresponding to that amplitude. Due to this, it is possible to verify the tertiary cross-modulation distortion (IM3) corresponding to the amplitude of the input signal.

Further, it is also possible to change the nonlinear amplitude distortion coefficient γ and nonlinear phase distortion Δθ in accordance with the outside air temperature of the modulation system.

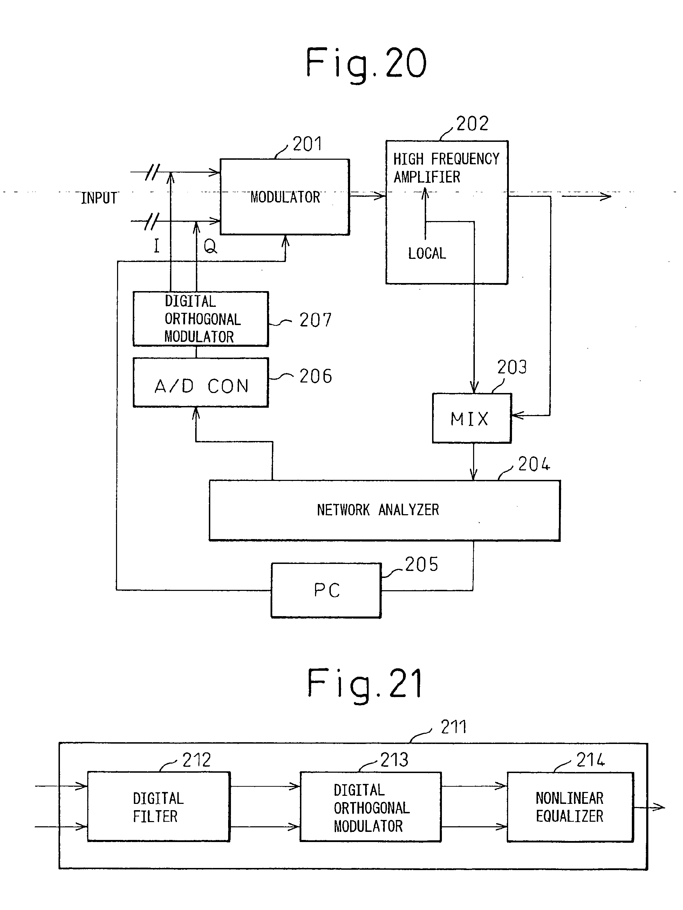

FIG. 20 is a block diagram showing the configuration of a modulation system for automatically generating an amount of distortion correction according to an embodiment of the present invention. In the figure, 201 indicates a modulator including the digital filter 11 and nonlinear equalizer, 202 a high frequency amplifier, 203 a mixing circuit (MIX), 204 a network analyzer, 205 a personal computer, 206 an A/D converter, and 207 an orthogonal modulator.

To automatically generate the nonlinear amplitude distortion γ and nonlinear phase distortion Δθ corresponding to the small input level to large input level, the network analyzer 204 successively outputs a small to large level carrier signal as the input level. This carrier signal is converted to a digital signal by the A/D converter 206 and input to the digital orthogonal modulator 207. The outputs I and Q are input to the modulator 201. The modulator 201 modulates the input I and Q signals to the carrier signal and inputs the result to the high frequency amplifier 202. Further, the output of the high frequency amplifier 202 and the local transmission frequency are mixed by the mixing circuit (MIX) 203 and input to the network analyzer 204. The network analyzer 204 measures the fluctuation of the output level with respect to the input level. The personal computer (PC) 205 changes the nonlinear amplitude distortion γ and nonlinear phase distortion Δθ and inputs them to the modulator 201 so that the input level from the mixing circuit (MIX) 203 to the network analyzer 204 becomes linear with respect to the output level to the A/D converter 206. Due to this, the output distortion of the high frequency amplifier 202 is automatically adjusted for and a linear output is obtained.

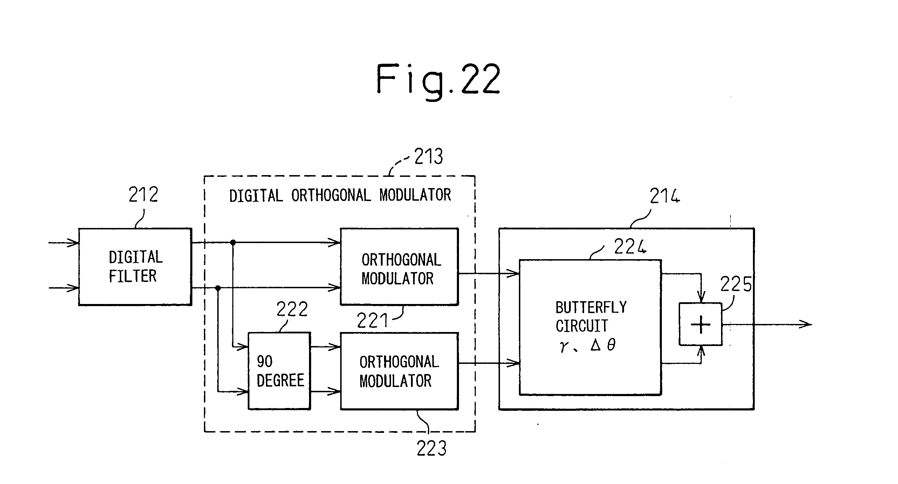

FIG. 21 is a block diagram showing the configuration of a modulation system for compensating for nonlinear distortion at the intermediate frequency band according to another embodiment of the present invention. In the figure, the point of difference from the modulation system shown in FIG. 1 is the difference in positions of the digital orthogonal modulator 213 and nonlinear equalizer 214. That is, in FIG. 21, the output of the digital filter 212 is received by the digital orthogonal modulator 213 and an intermediate frequency band signal is obtained at its output. The nonlinear equalizer 214 equalizes the distortion of this intermediate frequency band signal. In this way, even when equalizing the intermediate frequency signal, like with the IF transversal equalizer (EQL), it is necessary to separate the I and Q orthogonal axes. However, when using a digital modulator for the orthogonal modulator like with this technique, it is difficult to decompose the modulator output (IF) signal, so the method of making the I and Q axes in the IF band is, as shown FIG. 22, to shift the baseband 90 degrees for modulation.

FIG. 22 is a block diagram showing the detailed configuration of the modulation system shown in FIG. 21. In the figure, the digital orthogonal modulator 213 is provided with an orthogonal modulator 221 for orthogonally modulating the output of the digital filter 212 as it is, a shifter 222 for rotating the output of the digital filter 212 by 90 degrees, and an orthogonal modulator 223 for orthogonally modulating the output of the shifter 222. Further, the nonlinear equalizer 214 is provided with a butterfly circuit 224 of the baseband the same as shown in FIG. 9 and an adder 225. The output of the adder 225 is the intermediate frequency band.

### INDUSTRIAL APPLICABILITY

As clear from the above explanation, according to the present invention, it is possible to provide a modulation system which can compensate for even the nonlinear distortion generated by an inexpensive high frequency amplifier of the output stage of a communicator.

## Claims

1. A modulation system comprising:
a digital filter sampling binary input data at N times the symbol rate (N being an integer of 2 or more) and n-arizing it to trinary or higher data for output; and
a nonlinear equalizer over-compensating for the output of this digital- filter by nonlinear distortion measured in advance for the output of the high frequency amplifier and outputting the result.

2. A modulation system as set forth in claim 1, further comprising a digital orthogonal modulator digitally orthogonally modifying the output of the nonlinear equalizer and compensating for the nonlinear distortion at the baseband.

3. A modulation system as set forth in claim 1, further comprising a digital orthogonal modulator digitally orthogonally modulating the output of the digital filter between the digital filter and nonlinear equalizer and compensating for the nonlinear distortion at the intermediate frequency band.

4. A modulation system as set forth in claim 2, wherein the nonlinear equalizer is provided with an amplitude compensator compensating for the distortion prediction of the output amplitude of the high frequency amplifier at each sample timing of the output of the digital filter for equalization and a phase compensator compensating for the distortion prediction of the output phase of the high frequency amplifier at each sample timing of the output of the digital filter for equalization.

5. A modulation system as set forth in claim 1, wherein the nonlinear equalizer compensates for the distortion at only the part where the distortion of the output of the high frequency amplifier is a predetermined value or more.

6. A modulation system as set forth in claim 1, further provided with a 1/n frequency generator which inputs a signal having a frequency of 1/n (n is a positive integer) the symbol frequency of the binary input data to the nonlinear equalizer.

7. A modulation system as set forth in claim 1, wherein the nonlinear equalizer comprises a nonlinear distortion coefficient processor which uses the linear output power level of the high frequency amplifier with respect to the input power level as a provisional output power level, uses the input power level corresponding to provisional output power level on the distortion curve of the output level of the high frequency amplifier as a provisional input power level, and uses the ratio of the provisional input power level and provisional output power level the correction coefficient of the amplitude component, calculates the amount of suppression by the high frequency amplifier by the value of the correction coefficient multiplied with the input power level, and cancels out the amount of suppression by the amount of compensation.

8. A modulation system as set forth in claim 1, wherein the digital orthogonal modulator comprises a first multiplier multiplying an input I channel signal with a sine wave, a second multiplier multiplying an input Q channel signal with a cosine wave, and an adder adding the outputs of the first and second multipliers.

9. A modulation system as set forth in claim 1, further comprising a network analyzer for measuring fluctuation of the output power level of the high frequency amplifier with respect to fluctuation of the input power of the nonlinear equalizer and automatically generating a distortion compensation amount.
